# EUROPÄISCHE PATENTSCHRIFT

(11) **EP 2 106 475 B1**
(45) Veröffentlichungstag und Bekanntmachung des Hinweises auf die Patenterteilung: **06.12.2017**
(21) Anmeldenummer: 07857474.6
(22) Anmeldetag: 12.12.2007
(51) Int. Cl.: D06F 58/20

(54) **HAUSGERÄT UND VERFAHREN ZUM TROCKNEN EINES FEUCHTEN GUTES**
HOUSEHOLD APPLIANCE AND METHOD FOR DRYING A DAMP ITEM
APPAREIL MÉNAGER ET PROCÉDÉ DE SÉCHAGE D'UN PRODUIT HUMIDE

(30) Priorität: 22.12.2006 DE 102006061212
(43) Veröffentlichungstag der Anmeldung: 07.10.2009
(73) Patentinhaber: BSH Hausgeräte GmbH, 81739 München (DE)
(72) Erfinder: STOLZE, Andreas, 14612 Falkensee (DE)
(86) Internationale Anmeldenummer: PCT/EP2007/063811
(87) Internationale Veröffentlichungsnummer: WO 2008/077792

(56) Entgegenhaltungen:
- DE-A1- 4 307 372
- DE-A1- 4 409 607
- DE-C1- 10 255 575
- US-A- 1 275 507

## Beschreibung

Die Erfindung betrifft ein Hausgerät zum Trocknen eines feuchten Gutes mittels eines in einem im wesentlichen geschlossenen Trockenluftkanal führbaren, von einem Gebläse antreibbaren Luftstroms, durch welchen Luftstrom eine Behandlungskammer mit dem Gut, eine Kühlanordnung zum Abkühlen des Luftstroms und Auskondensieren von Feuchtigkeit aus dem Luftstrom nach Durchströmen der Behandlungskammer und eine Heizanordnung zum Erwärmen des Luftstroms vor Durchströmen der Behandlungskammer durchströmbar sind.

Gleichermaßen betrifft die Erfindung ein Verfahren zum Trocknen eines feuchten Gutes mittels eines in einem im wesentlichen geschlossenen Trockenluftkanal geführten, von einem Gebläse angetriebenen Luftstroms, durch welchen Luftstrom eine Behandlungskammer mit dem Gut, eine Kühlanordnung zum Abkühlen des Luftstroms und Auskondensieren von Feuchtigkeit aus dem Luftstrom nach Durchströmen der Behandlungskammer und eine Heizanordnung zum Erwärmen des Luftstroms vor Durchströmen der Behandlungskammer durchströmt werden.

Ein solches Hausgerät ist bekannt aus der DE 40 23 000 C2, der DE 197 38 735 C2 oder der WO 2006/029953 A1. In jedem dieser Dokumente ist ein entsprechendes Hausgerät beschrieben, bei dem die Kühlanordnung und die Heizanordnung zu einer Wärmepumpe gehören, in welcher jedenfalls ein Teil der Wärme, die dem Luftstrom in der Kühlanordnung entzogen wird, dem Luftstrom in der Heizanordnung wieder zugeführt wird.

Ein solches Hausgerät und ein solches Verfahren sind ebenfalls bekannt aus dem Dokument DE 102 55 575 C1. Das dort beschriebene Hausgerät beinhaltet eine Kühlanordnung und eine Heizanordnung, die zu einer Wärmepumpe des Kompressor-Typs vereinigt sind, wobei die Kühlanordnung ein Verdampfer für ein Kältemittel und die Heizanordnung ein Verflüssiger für dasselbe Kältemittel sind. Um den Betrieb der Wärmepumpe zu optimieren und derart an unterschiedliche Betriebszustände während eines Trocknungsprozesses anzupassen, dass auf ein Aufheizen bis zum Erreichen der optimalen Arbeitstemperatur sowie ein Abführen überschüssiger Wärmeenergie verzichtet werden kann, weist der Verdampfer mindestens zwei in Parallelschaltung vom Kältemittel durchströmte Wärmeübergangsflächen auf.

Gemäß DE 40 23 000 C2 kommt eine Kompressor-Wärmepumpe zum Einsatz, in welcher ein Arbeitsmittel (Kohlendioxid oder chlorierter und/oder fluorierter Kohlenwasserstoff) in gasförmigem Zustand von einem Kompressor komprimiert, dann in einem ersten Wärmetauscher unter Abgabe von Wärme verflüssigt, darauf beim Durchtritt durch eine Drossel entspannt und in einem zweiten Wärmetauscher unter Aufnahme von Wärme verdampft wird. Schließlich gelangt es zum Kompressor zurück. Gemäß DE 197 38 735 C2 kommt eine Wärmepumpe zum Einsatz, bei der ein erstes Arbeitsmittel (Ammoniak) von einem zweiten Arbeitsmittel (Wasser) periodisch absorbiert und desorbiert wird. Gemäß WO 2006/029953 A1 kommt eine Wärmepumpe zum Einsatz, in welcher zum Transport der Wärme thermoelektrische Elemente, auch als Peltier-Elemente bezeichnet und aufgebaut mit speziellen Halbleiterwerkstoffen, fungieren.

Aus der DE 1 410 206 A ist eine Waschmaschine bekannt, in welcher Waschgut nicht nur gewaschen, sondern auch getrocknet werden kann. Für die dazu erforderlichen zusätzlichen Einrichtungen zeigt die Schrift mehrere Alternativen. Es können eine elektrische Heizvorrichtung zum Erwärmen eines zur Trocknung von Waschgut eingesetzten Luftstroms und ein einfacher Wärmetauscher zum Abkühlen des erwärmten Luftstroms nach dem Beaufschlagen des Waschguts vorgesehen sein, wobei der Heizer und der Kühler aber auch zu einer Wärmepumpeneinrichtung gehören können. Die Wärmepumpeneinrichtung kann auch derartig ausgestaltet sein, dass sie mit Peltier-Elementen zur Nutzung des thermoelektrischen Effekts arbeitet.

Eine aus einem in der Datensammlung "Patent Abstracts of Japan" zur JP 08 057 194 A gehörigen englischen Kurzauszug hervorgehende Vorrichtung zum Trocknen von Waschgut enthält in ihrem ersten Kanalsystem neben einem Heizer und einem Kühler, welche beide zu einer thermoelektrisch betreibbaren Wärmepumpeneinrichtung gehören, einen dem Kühler vorgeschalteten zusätzlichen Wärmetauscher zur Abkühlung des von dem Waschgut abgeführten Luftstroms und eine dem Heizer nachgeschaltete zusätzliche Heizeinrichtung zum weiteren Erwärmen des Luftstroms vor dem Beaufschlagen des Waschguts.

Aus der Schrift "Wärmetransformationsprozesse ohne Phasenumwandlung" von Dr. Hans-Detlev Kühl, am 26. 11. 2006 im Internet unter der Adresse http://hdl.handle.net/2003/2798 verfügbar, siehe insbesondere Seiten 1 bis 29, sind ein Stirling-Prozess und ein Vuilleumier-Prozess als Beispiele für einen regenerativen Gaskreisprozess bekannt. Jeder dieser Prozesse ist geeignet zum Einsatz in einer Wärmepumpe oder einem Kältegerät, wobei Anwendungen in der Energietechnik (z. B. bei der Gebäudeheizung) oder zur Stofftrennung (insbesondere Luftverflüssigung und - zerlegung) erwogen werden.

Zum Vuilleumier-Prozess wird auch verwiesen auf das US-Patent 1,275,507 des Erfinders Rudolph Vuilleumier. Im Vuilleumier-Prozess ist ein mit einem Arbeitsfluid, speziell Luft, erfülltes und zeitlich konstantes Volumen aufgeteilt in drei Teilvolumina, welche mittels verschiebbarer Kolben relativ zueinander vergrößert und verkleinert werden können. Durch das Verschieben der Kolben einerseits und Zufuhr und Abfuhr von Wärme andererseits können die Teilvolumina expandiert oder kontrahiert werden. Dazu konkret erwogene Arbeitstemperaturen betragen 1000 °F absolut entsprechend 282°C für ein heißes Teilvolumen, 500 °F absolut entsprechend 4 °C für ein Teilvolumen mittlerer Temperatur und 400 °F absolut entsprechend -51 °C. Ziel der Operation der entsprechenden Einrichtung ist es, bei der konstant zu haltenden Temperatur von 400 °F absolut ein entsprechend temperiertes Kältemittel bereit zu stellen.

In allen gattungsgemäßen Hausgeräten mit Wärmepumpen, welche nicht den thermoelektrischen Effekt nutzen, erfolgen das Aufnehmen und das Freisetzen von Wärme bei Phasenübergängen im Arbeitsmittel. Es müssen spezifische Bedingungen hinsichtlich Druck und Temperatur eingehalten werden, damit die erforderlichen Phasenübergänge erreicht werden und effektiv genutzt werden können. Dies macht die Anpassung der Wärmepumpen an die in einem Hausgerät zu fordernden Temperaturniveaus unter Umständen schwierig. Die thermoelektrische Wärmepumpe erfordert den Einsatz ungewöhnlicher, teurer Halbleiterkomponenten und stellt spezifische Probleme hinsichtlich Wärmeisolierung und Trockenluftführung, da Wärme dort nur über vergleichsweise kurze räumliche Distanzen gepumpt werden kann. Dies macht die Konstruktion eines entsprechenden Hausgeräts schwierig. Zudem erreicht jede bekannte Wärmepumpe in einem Hausgerät bei ihrer Inbetriebsetzung nur relativ langsam die optimalen Betriebsbedingungen. Dadurch ergibt sich ein erweiterter Zeitbedarf für einen Trocknungsprozess, was von einem Benutzer als sehr nachteilig empfunden werden muss, nicht zuletzt deshalb, weil Hausgeräte mit Wärmepumpen üblicherweise zu sehr hohen Preisen verkauft und mit entsprechend hohen Erwartungen erworben werden.

Es ist Aufgabe der Erfindung, ein gattungsgemäßes Hausgerät anzugeben, bei dem anders als bisher bekannt eine Rückgewinnung von Wärme möglich ist. Ebenfalls Aufgabe der Erfindung ist, ein entsprechendes gattungsgemäßes Verfahren anzugeben.

Die Aufgabe wird durch eine Hausgerät oder ein Verfahren mit den Merkmalen des jeweiligen unabhängigen Patentanspruchs gelöst. Bevorzugte Ausgestaltungen sind Gegenstände der abhängigen Patentansprüche.

Das erfindungsgemäße Hausgerät zum Trocknen eines feuchten Gutes mittels eines in einem im wesentlichen geschlossenen Trockenluftkanal führbaren, von einem Gebläse antreibbaren Luftstroms, durch welchen Luftstrom eine Behandlungskammer mit dem Gut, eine Kühlanordnung zum Abkühlen des Luftstroms und Auskondensieren von Feuchtigkeit aus dem Luftstrom nach Durchströmen der Behandlungskammer und eine Heizanordnung zum Erwärmen des Luftstroms vor Durchströmen der Behandlungskammer durchströmbar sind, ist dadurch ausgezeichnet, dass die Kühlanordnung einen ersten Wärmetauscher aufweist, durch welchen Wärme aus dem Luftstrom einem in einem regenerativen Gaskreisprozess geführten Prozessgas zuführbar, und die Heizanordnung einen zweiten Wärmetauscher aufweist, durch welchen dem Luftstrom aus dem Prozessgas Wärme zuführbar ist.

Das erfindungsgemäße Verfahren zum Trocknen eines feuchten Gutes mittels eines in einem im wesentlichen geschlossenen Trockenluftkanal geführten, von einem Gebläse angetriebenen Luftstroms, durch welchen Luftstrom eine Behandlungskammer mit dem Gut, eine Kühlanordnung zum Abkühlen des Luftstroms und Auskondensieren von Feuchtigkeit aus dem Luftstrom nach Durchströmen der Behandlungskammer und eine Heizanordnung zum Erwärmen des Luftstroms vor Durchströmen der Behandlungskammer durchströmt werden, ist dadurch ausgezeichnet, dass in der Kühlanordnung Wärme aus dem Luftstrom einem in einem regenerativen Gaskreisprozess geführten Prozessgas zugeführt, und in der Heizanordnung Wärme aus dem Prozessgas dem Luftstrom zugeführt wird.

Entsprechend kommt erfindungsgemäß ein regenerativer Gaskreisprozess zum Einsatz, um die in der Kühlanordnung dem Luftstrom entzogene Wärme im Rahmen des thermodynamisch Möglichen zur Heizanordnung zu transportieren und dem Luftstrom wieder zuzuführen. Ein solcher Prozess läuft unter Umständen nicht stationär wie der - mit irreversiblen Drosselverlusten behaftete und deshalb nicht regenerative - Kreisprozess in einer Kompressor-Wärmepumpe ab. Er erfordert auch einen gewissen Einsatz an Mechanik wie Kolben nebst zugehörigen Antrieben. Allerdings erlaubt er bei gegebenen Arbeitsbedingungen eine im Grundsatz beliebige Annäherung an das thermodynamische Optimum und damit auch optimale Leistungswerte in der Praxis.

Vorzugsweise ist der regenerative Gasprozess derart ausgebildet, dass er in periodisch sich wiederholenden Zyklen abläuft, wobei die Periode eines entsprechenden Zyklus wesentlich geringer ist als eine Dauer, welche insgesamt zur bestimmungsgemäßen Trocknung des mit einer als üblich erwartbaren Feuchte und in einer als üblich erwartbaren Menge vorgelegten Gutes erforderlich wäre (typischer Trocknungsprozess) und zu deren Einhaltung das Hausgerät also ausgelegt ist. Für eine Anwendung in einem Wäschetrockner oder Geschirrspüler können die Dauer eines typischen Trocknungsprozesses auf eine Zeit in der Größenordnung einer Stunde und die Periode eines Zyklus des regenerativen Gasprozesses auf eine Zeit in der Größenordnung einer Zehntelsekunde angesetzt werden. Ein bevorzugtes Verhältnis zwischen der Dauer des typischen Trocknungsprozesses und der Dauer einer Periode des regenerativen Gasprozesses liegt damit zwischen 10.000 und 100.000, besonders bevorzugt zwischen 30.000 und 40.000.

Von großem Vorteil ist auch, dass der regenerative Gasprozess nicht angewiesen ist auf die Verwendung eines Arbeitsmittels, das Phasenübergänge bei spezifischen Temperaturen und Drücken aufweisen muss. Deshalb ist die Verwendung der von den Kompressor-Wärmepumpen bekannten und unter dem Aspekt des Umweltschutzes unter Umständen problematischen chlorierten und/oder fluorierten Kohlenwasserstoffen grundsätzlich nicht erforderlich. Wesentlichstes Auswahlkriterium für das Arbeitsmittel ist, dass es sich bei den in Betracht stehenden Temperaturen und Drücken so weit wie möglich wie ein ideales Gas verhält. Dies ermöglicht den Einsatz einfach zusammengesetzter und/oder in üblicher Umgebung vorkommender Gase einfacher, insbesondere unter dem Aspekt des Umweltschutzes unproblematischer Zusammensetzung.

Als Wärmetauscher sind die aus der Kompressor-Wärmepumpe bekannten Gas-Gas-Wärmetauscher grundsätzlich geeignet. Bei diesen Wärmetauschern handelt es sich - zumindest teilweise - um Gas-Gas-Wärmetauscher (wenn in ihnen auch Phasenübergänge stattfinden, die im regenerativen Gaskreisprozess nicht vorkommen), welche damit grundsätzlich zum Einsatz bei der Übertragung von Wärme zwischen Gasen bestimmt und geeignet sind.

Eine bevorzugte Weiterbildung des Hausgeräts zeichnet sich dadurch aus, dass das Prozessgas Wasserstoff oder ein Edelgas, insbesondere Helium, ist. Wasserstoff und Helium sind zwei ausgezeichnete zwei- oder einatomige Gase, die sich bei Bedingungen, die gewöhnlich in einem Hausgerät vorliegen, wie ein ideales Gas verhalten. Jedes Edelgas hat dazu den Vorzug der im Wesentlichen völligen chemischen Inertheit. Besonders trifft dies zu auf Helium, das einfachste Edelgas, welches dementsprechend besonders bevorzugt wird.

Ebenfalls bevorzugt sind Weiterbildungen des erfindungsgemäßen Hausgeräts dahingehend, dass der erste Wärmetauscher eingerichtet ist zu einem direkten Wärmetausch zwischen dem Luftstrom und dem Prozessgas und/oder dass der zweite Wärmetauscher eingerichtet ist zu einem direkten Wärmetausch zwischen dem Luftstrom und dem Prozessgas. In jedem Falle ergibt sich ein besonders einfacher Aufbau des entsprechenden Wärmetauschers oder beider und auch des Hausgeräts.

Eine andere bevorzugte Weiterbildung des erfindungsgemäßen Hausgeräts sieht vor, dass der erste Wärmetauscher und der zweite Wärmetauscher die einzigen Wärmetauscher im Trockenluftkanal sind. In diesem Hausgerät ist damit der regenerative Gasprozess der einzige Treiber des Trocknungsprozesses für das feuchte Gut.

Die Ausführungen in den beiden vorigen Absätzen sollen auch klar machen, dass auch Ausführungsformen der Erfindungen mit anderen Merkmalen als die dort beschriebenen bevorzugten Weiterbildungen möglich und dem Rahmen der Erfindung als zugehörig zu betrachten sind. Insbesondere ist es möglich, einen Austausch von Wärme zwischen dem Luftstrom und dem Prozessgas indirekt, also über ein zusätzliches Mittel oder Agens, vorzusehen und/oder einen weiteren Wärmetauscher und/oder eine zusätzliche Heizung in dem Trockenluftkanal vorzusehen. Diese Bemerkung gilt auch für alle anderen vorliegend beschriebenen bevorzugten Weiterbildungen der Erfindung.

Ebenfalls bevorzugt ist eine Weiterbildung des Hausgeräts dahingehend, dass es eine Wärmepumpe zur Durchführung des regenerativen Gaskreisprozesses enthält, wobei der erste und der zweite Wärmetauscher zu der Wärmepumpe gehören. Dazu hat das Hausgerät mit weiterem Vorzug in der Wärmepumpe zwei in jeweils einem Zylinder bewegbare Kolben zum zyklischen Verschieben des Prozessgases. Dabei kann jeder Kolben einen berührungslosen Linearantrieb aufweisen. Als Alternative zu solchen Linearantrieben denkbar ist ein so genanntes Koppelgetriebe, welches für jeden Kolben einen eigenen Kurbeltrieb aufweist. Dabei liegen die beiden Kolben bezüglich ihrer Bewegungsachsen nebeneinander oder hintereinander, und die Kurbeltriebe sind so angeordnet, dass zwischen den zyklisch bewegten Kolben eine Phasenverschiebung von etwa 90° besteht. Als weitere Alternative können die beiden Kolben in einer V-Anordnung in einem Winkel von etwa 90° zueinander angeordnet und die Kolben zur Erzielung der nötigen Phasenverschiebung an einem einzigen Kurbeltrieb angelenkt sein. Mit jeder derartigen Ausgestaltung wäre der Stirling-Prozess oder der Vuilleumier-Prozess realisierbar. Weiterhin bevorzugt ist eine Weiterbildung des Hausgeräts dahingehend, dass die Wärmepumpe einen Prozessgaskanal aufweist, durch welchen das Prozessgas verschiebbar ist, wobei der Prozessgaskanal einen Wärmespeicher aufweist. Mit einem solchen Wärmespeicher, auch "Regenerator" genannt und als solcher kennzeichnend für eine entsprechende, optimal ausgelegte Wärmepumpe, ist der regenerative Gaskreisprozess in seiner Funktion und Wirkung optimierbar, da der Regenerator als Speicher für überschüssige Wärme fungiert und einen Ausgleich zwischen unterschiedlichen Temperaturniveaus in einander benachbarten Teilvolumina des Prozessgases bewirkt.

Eine bevorzugte Weiterbildung des erfindungsgemäßen Verfahrens zeichnet sich dadurch aus, dass der regenerative Gaskreisprozess ein Vuilleumier-Prozess ist. Dieser Prozess beruht darauf, dass die zum Pumpen der Wärme aufzuwendende Energie in Form von Wärme bereitgestellt wird. Mechanische Energie erfordert dieser Prozess nur insoweit, als das Gas innerhalb des geschlossenen Systems, in welches es eingeschlossen ist, verschoben werden muss. Entsprechende mechanische Einrichtungen müssen deshalb nur den Reibungswiderstand des strömenden Gases und die an ihnen selbst auftretende Reibung überwinden; der Einsatz mechanischer Energie ist deshalb nur sehr gering. Der Vuilleumier-Prozess ist deshalb nicht auf den Einsatz elektrischer Energie zum Betreiben des Gaskreisprozesses beschränkt; die Wärmeenergie kann bei Bedarf anderweit, zum Beispiel über einen Gas- oder Ölbrenner, bereitgestellt werden.

Als Alternative zum Vuilleumier-Prozess wird auch in Betracht gezogen, den regenerativen Gaskreisprozess als Stirling-Prozess auszubilden. In diesem Zusammenhang ist allerdings statt des Einsatzes von Wärmeenergie zum Betreiben des Gaskreisprozesses ein Einsatz von mechanischer Energie erforderlich. Allerdings kann dieser Einsatz mittels eines geeigneten Motors, insbesondere Elektromotors, erbracht werden, wobei keinerlei in einem Hausgerät ungeläufige Komponente zu Einsatz kommen müsste und grundsätzlich vorhandene Erfahrung genutzt werden kann.

Mit besonderem Vorzug ist die Behandlungskammer des erfindungsgemäßen Hausgeräts ausgebildet als drehbare Trommel, wobei jede hier beschriebene Weiterbildung der Erfindung zu dieser Ausbildung hinzutreten kann.

Ebenfalls mit besonderem Vorzug ist das erfindungsgemäße Hausgerät ausgebildet als Wäschetrockner, wobei ebenfalls jede hier beschriebene Weiterbildung der Erfindung zu dieser Ausbildung hinzutreten kann.

Den hier im Einzelnen beschriebenen bevorzugten Weiterbildungen des erfindungsgemäßen Hausgeräts entsprechen bevorzugte Weiterbildungen des erfindungsgemäßen Verfahrens und umgekehrt. Solche Weiterbildungen sind vorliegend unter Umständen nicht explizit oder detailliert beschrieben, müssen aber gleichwohl als dem Rahmen der Erfindung zugehörig betrachtet werden.

Ausführungsbeispiele der Erfindung werden nachfolgend anhand der Zeichnung beschrieben. Die Zeichnung zeigt Funktionsskizzen, aus denen sich die vorliegend wesentlichen Merkmale ergeben. Zur Erschließung konkreter Ausführungsbeispiele aus diesen Funktionsskizzen wird auf die eingangs zitierten Dokumente des Standes der Technik, insbesondere die Schriften zu Wäschetrocknern und die Schrift von Dr. Hans-Detlev Kühl verwiesen. Im Einzelnen zeigen:
- Fig. 1: ein Hausgerät mit einer Vuilleumier-Wärmepumpe; und
- Fig. 2: ein Hausgerät mit einer Stirling-Wärmepumpe.

Einander entsprechende Merkmale der beiden Figuren tragen jeweils dasselbe Bezugszeichen.

Zur Erläuterung der Funktion der in den Figuren dargestellten Hausgeräte wird zunächst auf beide Figuren gemeinsam Bezug genommen.

Jede Figur zeigt ein Hausgerät 1, und zwar einen Wäschetrockner 1, bestimmt zum Trocknen eines feuchten Gutes 2, nämlich eines Wäschepostens 2. Das Hausgerät 1 hat einen im Wesentlichen geschlossenen Trockenluftkanal 3, in welchem ein Luftstrom geführt wird. Dazu wird der Luftstrom von einem Gebläse 4 angetrieben. Das feuchte Gut 2 ist in einer Behandlungskammer 5 angeordnet, welche Behandlungskammer 5 in bekannter Weise ausgebildet ist als drehbare Trommel 5. Nachdem der Luftstrom die Trommel 5 durchsetzt hat, gelangt er in Trockenluftkanal 3 zu einem ersten Wärmetauscher 6, welcher als Kondensator 6 fungiert. Darin wird der Luftstrom soweit abgekühlt, dass Feuchtigkeit, welche er in der Trommel 5 von dem feuchten Gut 2 aufgenommen hat, auskondensiert. Ein Feuchtigkeitsabscheider 7, welcher in den vorliegenden Ausführungsbeispielen dem Kondensator 6 nachgeordnet ist, dient zum Abscheiden der aus dem Luftstrom auskondensierten Feuchtigkeit von dem Luftstrom. Abgeschiedene Feuchtigkeit wird gesammelt und nach Beendigung des Trocknens des feuchten Gutes 2 entsorgt. Es entspricht herkömmlicher Praxis, den Kondensator 6 und den Feuchtigkeitsabscheider 7 mehr oder weniger in einem einzigen Bauteil zusammenzufassen; in den vorliegenden Figuren sind diese Komponenten vor allem der Klarheit halber separat gezeichnet. Hinter dem Kondensator 6 und dem Feuchtigkeitsabscheider 7 befindet sich im Trockenluftkanal 3 das erwähnte Gebläse 4, auf welches im Trockenluftkanal 3 ein zweiter Wärmetauscher 8 folgt, welcher ausgebildet ist als Heizer 8 für den Luftstrom. Nachdem der Luftstrom den zweiten Wärmetauscher 8 durchlaufen hat und dabei erwärmt wurde, gelangt er zurück in die Trommel 5, wo er aus dem feuchten Gut 2 erneut Feuchtigkeit aufnehmen kann.

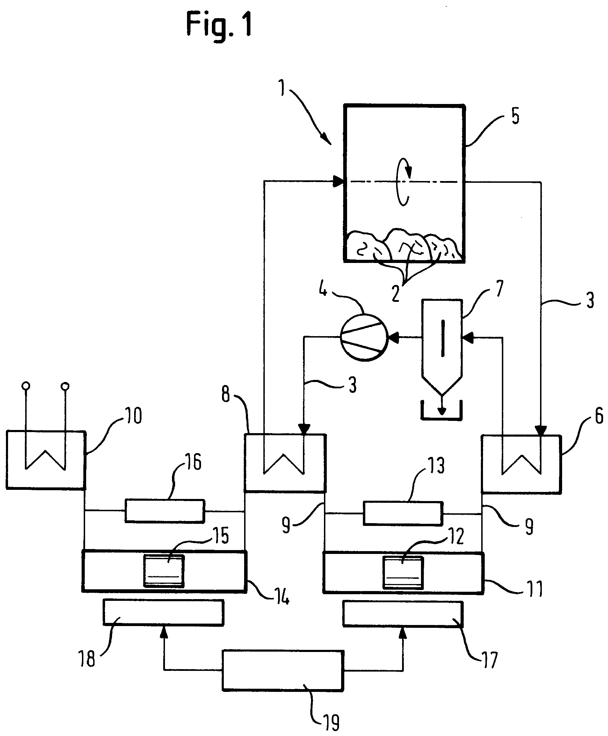

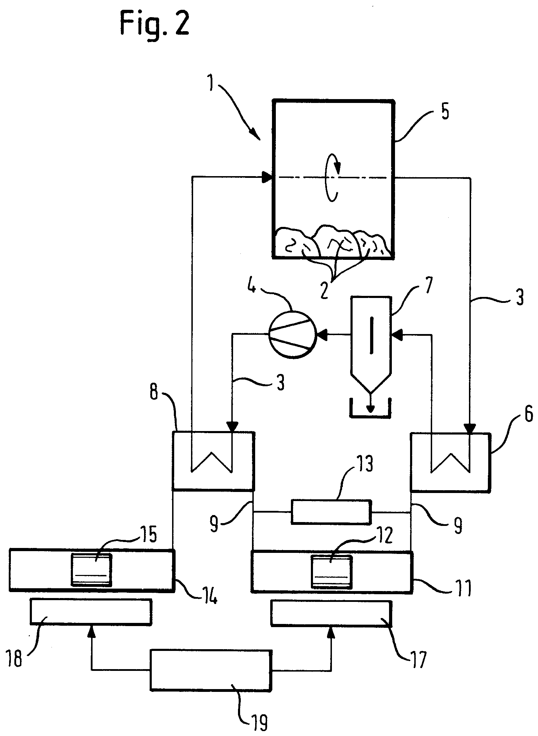

In jedem Ausführungsbeispiel sind der erste Wärmetauscher 6 und der zweite Wärmetauscher 8 Bestandteile einer Wärmepumpe 6, 8 bis 19. Im Falle der Figur 1 handelt es sich um eine Vuilleumier-Wärmepumpe 6, 8 bis 19, im Falle der Figur 2 hingegen um eine Stirling-Wärmepumpe 6, 8, 9, 11 bis 15, 17 bis 19. Grundsätze und Ausführungsbeispiele solcher Wärmepumpen (wie auch anderer Wärmepumpen mit regenerativen Gaskreisprozessen) sind insbesondere der Schrift von Dr. Hans-Detlev Kühl entnehmbar, und auf diese Schrift wird diesbezüglich erneut Bezug genommen.

Im Ausführungsbeispiel gemäß Figur 1, auf welches nunmehr allein Bezug genommen wird, kommt eine Vuilleumier-Wärmepumpe 6, 8 bis 19 zum Einsatz, welche nachfolgend im Einzelnen beschrieben wird.

Die Wärmepumpe 6, 8 bis 19 beinhaltet einen Prozesskanal 9 in welchem ein geeignetes und bei den gegebenen Temperaturen möglichst weitgehend einem idealen Gas entsprechendes Prozessgas, namentlich Helium, eingeschlossen ist. Der Prozessgaskanal 9 hat ein erstes Ende an dem ersten Wärmetauscher 6, welcher auf einem niedrigem Temperaturniveau als Wärmesenke fungiert, wobei und indem er aus dem Luftstrom im Trockenluftkanal 3 Wärme aufnimmt, wie beschrieben. Im Inneren des Prozesskanals 9 befindet sich der zweite Wärmetauscher 8, welcher auf einem mittleren Temperaturniveau als Wärmequelle fungiert, wobei und indem er in beschriebener Weise dem Luftstrom im Trockenluftkanal 3 Wärme zuführt. An einem zweiten Ende des Prozessgaskanals 9 befindet sich ein Heizer 10, welcher elektrisch betrieben wird und das zu ihm gelangte Prozessgas auf ein hohes Temperaturniveau aufheizt. Die derart in das Prozessgas hinein gelangende Wärme ist diejenige Energie, welche den regenerativen Gaskreisprozess in dem Prozessgaskanal 9, vorliegend einen Vuilleumier-Prozess, antreibt. Zwischen dem ersten Wärmetauscher 6 und dem zweiten Wärmetauscher 8 weist der Prozessgaskanal 9 einen ersten Zylinder 11 auf, in welchem ein erster Kolben 12 beweglich ist. Parallel geschaltet zu dem ersten Zylinder 11 ist ein erster Regenerator 13, welcher ein von dem Prozessgas weitgehend frei durchströmbarer erster Wärmespeicher 13 ist. Indem der erste Kolben 12 bewegt wird, wird das Prozessgas durch den ersten Regenerator 13 hindurchgedrückt und kann so von dem ersten Wärmetauscher 6 zum zweiten Wärmetauscher 8 oder zurück transportiert werden. Dabei gibt es eventuelle überschüssige Wärme an den ersten Regenerator 13 ab oder nimmt eventuell fehlende Wärme aus diesem auf, je nachdem, in welcher Richtung es den ersten Regenerator 13 durchströmt.

Zwischen dem zweiten Wärmetauscher 8 und dem Heizer 10 weist der Prozessgaskanal 9 einen zweiten Zylinder 14 mit darin beweglichem zweitem Kolben 15 sowie, wiederum parallel geschaltet zu dem zweiten Zylinder 14, einen zweiten Regenerator 16 auf. Durch Verschieben des zweiten Kolbens 15 wird Prozessgas durch den Regenerator 16 vom dem zweiten Wärmetauscher 8 zum Heizer 10 oder zurück transportiert, wobei es wiederum überschüssige Wärme abgibt oder fehlende Wärme aufnimmt.

Zum Betreiben des Vuilleumier-Prozesses mit dem Prozessgas unbedingt erforderlich sich periodische, aufeinander abgestimmte und in wohlbestimmter Phasenbeziehung zueinander stehende Bewegungen des ersten Kolbens 12 und des zweiten Kolbens 15. Zu diesem Zweck sind ein erster Linearantrieb 17 für den ersten Kolben 12 und ein zweiter Linearantrieb 18 für den zweiten Kolben 15 vorgesehen, welche durch eine Steuereinrichtung 19 gesteuert werden und die Kolben 12 und 15 berührungslos verschieben. Dies ist insbesondere deshalb in günstiger Weise möglich, weil der Vuilleumier-Prozess ausschließlich mit der vom Heizer 10 gelieferten Wärmeenergie betrieben wird und das Einbringen mechanischer Energie über die Kolben 12 und 15 nur insoweit erforderlich ist, als das Prozessgas zwischen dem ersten Wärmetauscher 6, dem zweiten Wärmetauscher 8 und dem Heizer 10 hin und her befördert werden muss. Dabei müssen mehr oder weniger nur Trägheits- und Reibungskräfte des strömenden Prozessgases sowie der sich bewegenden Kolben 12 und 15 überwunden werden. Insbesondere ist es nicht erforderlich, dass die Linearantriebe 17 und 18 die Kolben 12 und 15 einander berühren; vielmehr ist es tatsächlich möglich, die Kolben 12 und 15 berührungsfrei durch die Linearantriebe 17 und 18 zu führen. Entsprechend ist es nicht erforderlich, bewegte Komponenten in gedichteter Weise aus dem Prozessgaskanal 9 herauszuführen; der Prozessgaskanal 9 bildet vielmehr eine in sich vollkommen geschlossene und insoweit starre Einheit, die dementsprechend einfach, zuverlässig und dauerhaft gedichtet werden kann - auch dann, wenn das Prozessgas unter einem Druck bis zu mehreren 100 bar steht. Für die Betriebssicherheit und auch die Langlebigkeit des Hausgerätes 1 ist dies von hoher Bedeutung.

Der Betrieb der Wärmepumpe 6, 8 bis 19 bei einem typischen Trocknungsprozess, für welchen eine Zeit in der Größenordnung einer Stunde anzusetzen wäre, erfolgt durch wiederholtes Verschieben des Prozessgases innerhalb des Prozessgaskanals 9, wobei die Kolben 12 und 15 zyklisch und zueinander phasenverschoben mit einer Periode in der Größenordnung einer Zehntelsekunde bewegt werden. Ein bevorzugtes Verhältnis zwischen der Dauer des Trocknungsprozesses und der Dauer der Periode des regenerativen Gasprozesses liegt damit zwischen 10.000 und 100.000, besonders bevorzugt zwischen 30.000 und 40.000.

Figur 2 zeigt ein Hausgerät 1 mit einer Stirling-Wärmepumpe 6, 8, 9, 11 bis 15, 17 bis 19 als Alternative zur Vuilleumier-Wärmepumpe 6, 8 bis 19. Im Vergleich zur Vuilleumier-Wärmepumpe 6, 8 bis 19 der Figur 1 fehlen der Stirling-Wärmepumpe 6, 8, 9, 11 bis 15, 17 bis 19 der Figur 2 der Heizer 10 und der zweite Regenerator 16. Außerdem ist der zweite Zylinder 14 nicht vollständig im Prozessgaskanal 9 enthalten, vielmehr endet der Prozessgaskanal 9 am zweiten Kolben 15 im zweiten Zylinder 14. Das dem zweiten Wärmetauscher 8 abgewandte Ende des zweiten Zylinders 14 ist offen. Ebenso wie in der Vuilleumier-Wärmepumpe 6, 8 bis 19 gemäß Figur 1 müssen die Kolben 12 und 15 in der Stirling-Wärmepumpe 6, 8, 9, 11 bis 15, 17 bis 19 gemäß Figur 2 periodisch, aufeinander abgestimmt und mit genau vorgegebener Phasenbeziehung zueinander bewegt werden, wozu wiederum Linearantriebe 17 und 18, gesteuert von einer Steuereinrichtung 19, vorgesehen sind.

Allerdings wird dem Stirling-Prozess die zu seinem Betrieb erforderliche Energie nicht als Wärmeenergie zugeführt, sondern als mechanische Energie - es ist diejenige Energie, welche mittels des zweiten Kolbens 15 aufgewendet wird, um das Prozessgas periodisch zu komprimieren und zu entspannen. Deshalb hat die Stirling-Wärmepumpe 6, 8, 9, 11 bis 15, 17 bis 19 keinen Heizer 10 wie die Vuilleumier-Wärmepumpe 6, 8 bis 19, und deshalb muss in der Stirling-Wärmepumpe 6, 8, 9, 11 bis 15, 17 bis 19 der zweite Linearantrieb 18 wesentlich leistungsfähiger sein als der zweite Linearantrieb 18 in der Vuilleumier-Wärmepumpe 6, 8 bis 19. Außerdem ist es erforderlich, dass der Prozessgaskanal 9 von dem zweiten Kolben 15 beweglich und unter dauernder Druckbelastung durch das Prozessgas praktisch frei von Leckage gedichtet wird. Auch dies erfordert einen unter Umständen erheblichen Mehraufwand.

Dem einfacheren grundsätzlichen Aufbau der Stirling-Wärmepumpe 6, 8, 9, 11 bis 15, 17 bis 19 stehen die geringeren mechanischen Anforderungen an den zweiten Linearantrieb 18 der Vuilleumier-Wärmepumpe 6, 8 bis 19 gegenüber, auch ist die Vuilleumier-Wärmepumpe 6, 8 bis 19 hinsichtlich der Erzeugung der zu ihren Betrieb notwendigen Wärmeenergie deutlich flexibler als die Stirling-Wärmepumpe 6, 8, 9, 11 bis 15, 17 bis 19.

In jedem Fall bieten das vorstehend beschriebene Hausgerät und seine bevorzugten Ausführungsformen mit dem Einsatz eines regenerativen Gaskreisprozesses die Möglichkeit der Verwendung eines unter Funktions- und Sicherheitsaspekten vollkommen unkritischen Arbeitsmittels. Außerdem können in der entsprechenden Wärmepumpe hohe Wärmepumpfaktoren bei niedrigen Temperaturniveaus erreicht werden. In der bevorzugten Ausführungsform mit Vuilleumier-Wärmepumpe kann bei einer möglichst hohen Temperaturdifferenz zwischen dem hohen und dem niedrigen Temperaturniveaus sowie einer vergleichsweise geringen Temperaturdifferenz zwischen den mittleren und dem niedrigen Temperaturniveaus eine hohe Leistungszahl der Wärmepumpe erreicht werden. Damit besteht die Möglichkeit, ein Hausgerät in Form eines Wäschetrockners zu schaffen, welchem eine Energieeffizienzklasse A zugeordnet werden kann. Entsprechende Kriterien können berücksichtigt werden durch die Wahl des Prozessgases und des Drucks, mit welchem dieses in der Wärmepumpe vorliegen muss. Auch die Gestaltung der Wärmespeicher in der Wärmepumpe kann deren betriebliche Eigenschaften günstig beeinflussen.

Mit der Erfindung wird die Anwendung eines regenerativen Gaskreisprozesses in einem Hausgerät zur Trocknung eines feuchten Gutes erschlossen, und damit ein neuer Weg zur Schaffung eines besonders energieeffizienten Hausgerätes geebnet.

### BEZUGSZEICHENLISTE

- 1: Hausgerät
- 2: Feuchtes Gut, Wäscheposten
- 3: Trockenluftkanal
- 4: Gebläse
- 5: Behandlungskammer, Trommel
- 6: Erster Wärmetauscher, Kondensator
- 7: Feuchtigkeitsabscheider
- 8: Zweiter Wärmetauscher, Heizer
- 9: Prozessgaskanal
- 10: Heizer für Prozessgas
- 11: Erster Zylinder
- 12: Erster Kolben
- 13: Erster Wärmespeicher, erster Regenerator
- 14: Zweiter Zylinder
- 15: Zweiter Kolben
- 16: Zweiter Wärmespeicher oder zweiter Regenerator
- 17: Erster Linearantrieb
- 18: Zweiter Linearantrieb
- 19: Steuereinrichtung

## Patentansprüche

1. Hausgerät (1) zum Trocknen eines feuchten Gutes (2) mittels eines in einem im wesentlichen geschlossenen Trockenluftkanal (3) führbaren, von einem Gebläse (4) antreibbaren Luftstroms, durch welchen Luftstrom eine Behandlungskammer (5) mit dem Gut (2), eine Kühlanordnung (6,7) zum Abkühlen des Luftstroms (3) und Auskondensieren von Feuchtigkeit aus dem Luftstrom nach Durchströmen der Behandlungskammer (5) und eine Heizanordnung (8) zum Erwärmen des Luftstroms vor Durchströmen der Behandlungskammer (5) durchströmbar sind, **dadurch gekennzeichnet, dass** die Kühlanordnung (6,7) einen ersten Wärmetauscher (6) aufweist, durch welchen Wärme aus dem Luftstrom einem in einem regenerativen Gaskreisprozess geführten Prozessgas zuführbar, und die Heizanordnung (8) einen zweiten Wärmetauscher (8) aufweist, durch welchen dem Luftstrom aus dem Prozessgas Wärme zuführbar ist.

2. Hausgerät nach Anspruch 1, bei dem das Prozessgas Wasserstoff oder ein Edelgas, insbesondere Helium, ist.

3. Hausgerät (1) nach einem der vorigen Ansprüche, bei dem der erste Wärmetauscher (6) eingerichtet ist zu einem direkten Wärmetausch zwischen dem Luftstrom und dem Prozessgas.

4. Hausgerät (1) nach einem der vorigen Ansprüche, bei dem der zweite Wärmetauscher (8) eingerichtet ist zu einem direkten Wärmetausch zwischen dem Luftstrom und dem Prozessgas.

5. Hausgerät (1) nach einem der vorigen Ansprüche, bei dem der erste Wärmetauscher (6) und der zweite Wärmetauscher (8) die einzigen Wärmetauscher (6, 8) im Trockenluftkanal (3) sind.

6. Hausgerät (1) nach einem der vorigen Ansprüche, welches eine Wärmepumpe (6, 8 bis 19) zur Durchführung des regenerativen Gaskreisprozesses enthält, wobei der erste Wärmetauscher (6) und der zweite Wärmetauscher (8) zur Wärmepumpe (6, 8 bis 19) gehören.

7. Hausgerät (1) nach Anspruch 6, bei welchem die Wärmepumpe (6, 8 bis 19) zwei in jeweils einem Zylinder (11, 14) bewegbare Kolben (12, 15) zum zyklischen Verschieben des Prozessgases aufweist.

8. Hausgerät (1) nach einem der Ansprüche 6 und 7, bei dem die Wärmepumpe (6, 8 bis 19) einen Prozessgaskanal (9) aufweist, durch welchen das Prozessgas verschiebbar ist, wobei der Prozessgaskanal (9) zumindest einen Wärmespeicher (13, 16) aufweist.

9. Hausgerät (1) nach einem der vorigen Ansprüche, bei dem die Wärmepumpe (6, 8 bis 19) ausgebildet ist zum Betrieb in einem Vuilleumier-Prozess.

10. Hausgerät (1) nach Anspruch 9, bei der die Wärmepumpe (6, 8 bis 19) eine elektrische Heizung (10) für das Prozessgas aufweist.

11. Hausgerät nach einem der Ansprüche 1 bis 8, bei dem die Wärmepumpe (6, 8 bis 19) ausgebildet ist zum Betrieb in einem Stirling-Prozess.

12. Hausgerät (1) nach einem der vorigen Ansprüche, bei dem die Behandlungskammer (5) eine drehbare Trommel (5) ist.

13. Hausgerät (1) nach einem der vorigen Ansprüche, welches als Wäschetrockner (1) ausgebildet ist.

14. Verfahren zum Trocknen eines feuchten Gutes (2) mittels eines in einem im wesentlichen geschlossenen Trockenluftkanal (3) geführten, von einem Gebläse (4) angetriebenen Luftstroms, durch welchen Luftstrom eine Behandlungskammer (5) mit dem Gut (2), eine Kühlanordnung (6,7) zum Abkühlen des Luftstroms (3) und Auskondensieren von Feuchtigkeit aus dem Luftstrom nach Durchströmen der Behandlungskammer (5) und eine Heizanordnung (8) zum Erwärmen des Luftstroms vor Durchströmen der Behandlungskammer (5) durchströmt werden, **dadurch gekennzeichnet, dass** in der Kühlanordnung (6,7) Wärme aus dem Luftstrom einem in einem regenerativen Gaskreisprozess geführten Prozessgas zugeführt, und in der Heizanordnung (8,9) Wärme aus dem Prozessgas dem Luftstrom zugeführt wird.

15. Verfahren nach Anspruch 14, bei dem der regenerative Gaskreisprozess ein Vuilleumier-Prozess ist.

16. Verfahren nach Anspruch 14, bei dem der regenerative Gaskreisprozess ein Stirling-Prozess ist.

17. Verfahren nach einem der Ansprüche 14 bis 16, bei welchem Verfahren der regenerative Gaskreisprozess derart ausgebildet ist, dass er in periodisch sich wiederholenden Zyklen abläuft, wobei ein entsprechender Zyklus eine Periode aufweist, und bei welchem Verfahren eine Dauer für einen typischen Trocknungsprozess vorgegeben ist, wobei ein Verhältnis zwischen der Dauer und der Periode zwischen 10.000 und 100.000 liegt.

18. Verfahren nach Anspruch 17, bei dem das Verhältnis zwischen 30.000 und 40.000 liegt.

## Claims

1. Household appliance (1) for drying a damp item (2) by means of an air current which is able to be driven in an essentially closed drying air channel (3) by a fan (4) with said air current able to flow through a treatment chamber (5) with the item (2), through a cooling arrangement (6, 7) for cooling the air current (3) and condensing out moisture from the air current after it has flowed through the treatment chamber (5) and through a heating arrangement (8) for heating up the air current before it flows through the treatment chamber (5), **characterised in that** the cooling arrangement (6, 7) has a first heat exchanger (6) through which heat from the air current is able to be fed into a process gas conducted in a regenerative gas circulation process, and the heating arrangement (8) has a second heat exchanger (8) through which heat is able to be fed into the air current from the process gas.

2. Household appliance according to claimed 1, in which the process gas is hydrogen or a noble gas, especially helium.

3. Household appliance (1) according to one of the preceding claims, in which the first heat exchanger (6) is configured for a direct heat exchange between the air current and the process gas.

4. Household appliance (1) according to one of the preceding claims, in which the second heat exchanger (8) is configured for a direct heat exchange between the air current and the process gas.

5. Household appliance (1) according to one of the preceding claims, in which the first heat exchanger (6) and the second heat exchanger (8) are the only heat exchangers (6, 8) in the drying air channel (3).

6. Household appliance (1) according to one of the preceding claims, which contains a heat pump (6, 8 through 19) for executing the regenerative gas circulation process, wherein the first heat exchanger (6) and the second heat exchanger (8) belong to the heat pump (6, 8 to 19).

7. Household appliance (1) according to claim 6, in which the heat pump (6, 8 to 19) has two pistons (12, 15) movable in a cylinder (11, 14) in each case for cyclic displacement of the process gas.

8. Household appliance (1) according to one of claims 6 and 7, in which the heat pump (6, 8 to 19) has a process gas channel (9), through which the process gas is able to be displaced, wherein the process gas channel (9) has at least one heat reservoir (13, 16).

9. Household appliance (1) according to one of the preceding claims, in which the heat pump (6, 8 to 19) is embodied for operating a Vuilleumier process.

10. Household appliance (1) according to claim 9, in which the heat pump (6, 8 to 19) has an electrical heater (10) for the process gas.

11. Household appliance according to one of claims 1 through 8, in which the heat pump (6, 8 to 19) is embodied for operation in a Stirling process.

12. Household appliance (1) according to one of the preceding claims, in which the treatment chamber (5) is a rotatable drum (5).

13. Household appliance (1) according to one of the preceding claims which is embodied as a tumble dryer (1).

14. Method for drying a damp item (2) by means of an air current which is able to be driven in an essentially closed drying air channel (3) by a fan (4) with said air current able to flow through a treatment chamber (5) with the item (2), through a cooling arrangement (6, 7) for cooling the air current (3) and condensing out moisture from the air current after it has flowed through the treatment chamber (5) and through a heating arrangement (8) for heating up the air current before it flows through the treatment chamber (5), **characterised in that** the cooling arrangement (6, 7) has a first heat exchanger (6) through which heat from the air current is able to be fed into a process gas conveyed in a regenerative gas circulation process, and the heating arrangement (8) has a second heat exchanger (8) through which heat is able to be fed into the air current from the process gas.

15. Method according to claim 14, in which the regenerative gas circulation process is a Vuilleumier process.

16. Method according to claim 14, in which the regenerative gas circulation process is a Stirling process.

17. Method according to one of claims 14 to 16, in which method the regenerative gas circulation process is embodied such that it runs in periodically repeating cycles, wherein a corresponding cycle has a period, and in which method a duration for a typical drying process is predetermined, wherein a ratio between the duration and the period lies between 10,000 and 100,000.

18. Method according to claim 17, in which the ratio lies between 30,000 and 40,000.

## Revendications

1. Appareil ménager (1) pour le séchage d'un produit humide (2) au moyen d'un écoulement d'air pouvant être entraîné par une soufflante (4) dans un canal d'air sec (3) essentiellement fermé, lequel écoulement d'air pouvant s'écouler à travers une chambre de traitement (5) contenant le produit (2), un dispositif de refroidissement (6, 7) pour refroidir l'écoulement d'air (3) et condenser l'humidité au départ de l'écoulement d'air après avoir traversé la chambre de traitement (5) et un dispositif de chauffage (8) pour chauffer l'écoulement d'air avant la traversée de la chambre de traitement (5), **caractérisé en ce que** le dispositif de refroidissement (6, 7) présente un premier échangeur de chaleur (6) à travers lequel de la chaleur issue de l'écoulement d'air peut être adjointe à un gaz de processus mené dans un processus de circuit de gaz avec régénération, et le dispositif de chauffage (8) présente un deuxième échangeur de chaleur (8) à travers lequel de la chaleur issue du gaz de processus peut être adjointe à l'écoulement d'air.

2. Appareil ménager selon la revendication 1, dans lequel le gaz de processus est de l'hydrogène ou un gaz noble, en particulier l'hélium.

3. Appareil ménager (1) selon l'une des revendications précédentes, dans lequel le premier échangeur de chaleur (6) est aménagé en vue d'un échange de chaleur direct entre l'écoulement d'air et le gaz de processus.

4. Appareil ménager (1) selon l'une des revendications précédentes, dans lequel le deuxième échangeur de chaleur (8) est aménagé en vue d'un échange de chaleur direct entre l'écoulement d'air et le gaz de processus.

5. Appareil ménager (1) selon l'une des revendications précédentes, dans lequel le premier échangeur de chaleur (6) et le deuxième échangeur de chaleur (8) sont les seuls échangeurs de chaleur (6, 8) dans le canal d'air sec (3).

6. Appareil ménager (1) selon l'une des revendications précédentes, lequel contient une pompe à chaleur (6, 8 à 19) afin de réaliser le processus de circuit de gaz avec régénération, dans lequel le premier échangeur de chaleur (6) et le deuxième échangeur de chaleur (8) appartiennent à la pompe à chaleur (6, 8 à 19).

7. Appareil ménager (1) selon la revendication 6, dans lequel la pompe à chaleur (6, 8 à 19) présente deux pistons (12, 15) déplaçables dans respectivement un cylindre (11, 14) pour le déplacement cyclique du gaz de processus.

8. Appareil ménager (1) selon l'une des revendications 6 et 7, dans lequel la pompe à chaleur (6, 8 à 19) présente un canal de gaz de processus (9) à travers lequel le gaz de processus est déplaçable, le canal de gaz de processus (9) présentant au moins un accumulateur de chaleur (13, 16).

9. Appareil ménager (1) selon l'une des revendications précédentes, dans lequel la pompe à chaleur (6, 8 à 19) est exécutée en vue d'une exploitation dans le cadre d'un processus de Vuilleumier.

10. Appareil ménager (1) selon la revendication 9, dans lequel la pompe à chaleur (6, 8 à 19) présente un chauffage électrique (10) pour le gaz de processus.

11. Appareil ménager selon l'une des revendications 1 à 8, dans lequel la pompe à chaleur (6, 8 à 19) est exécutée en vue d'une exploitation dans le cadre d'un processus de Stirling.

12. Appareil ménager (1) selon l'une des revendications précédentes, dans lequel la chambre de traitement (5) est un tambour rotatif (5).

13. Appareil ménager (1) selon l'une des revendications précédentes, lequel est exécuté sous forme de sèche-linge (1).

14. Procédé pour le séchage d'un produit humide (2) au moyen d'un écoulement d'air entraîné par une soufflante (4) dans un canal d'air sec (3) essentiellement fermé, lequel écoulement d'air s'écoulant à travers une chambre de traitement (5) contenant le produit (2), un dispositif de refroidissement (6, 7) pour refroidir l'écoulement d'air (3) et condenser l'humidité au départ de l'écoulement d'air après avoir traversé la chambre de traitement (5) et un dispositif de chauffage (8) pour chauffer l'écoulement d'air avant la traversée de la chambre de traitement (5), **caractérisé en ce que** dans le dispositif de refroidissement (6, 7), la chaleur issue de l'écoulement d'air est adjointe à un gaz de processus mené dans un processus de circuit de gaz avec régénération, et de la chaleur issue du gaz de processus est adjointe à l'écoulement d'air dans le dispositif de chauffage (8, 9).

15. Procédé selon la revendication 14, dans lequel le processus de circuit de gaz avec régénération est un processus de Vuilleumier.

16. Procédé selon la revendication 14, dans lequel le processus de circuit de gaz avec régénération est un processus de Stirling.

17. Procédé selon l'une des revendications 14 à 16, dans lequel le processus de circuit de gaz avec régénération est exécuté de telle sorte qu'il s'écoule selon des cycles périodiques répétitifs, dans lequel un cycle correspondant présente une période et dans lequel une durée pour un processus de séchage caractéristique est prédéterminée, un rapport entre la durée et la période se situant entre 10 000 et 100 000.

18. Procédé selon la revendication 17, dans lequel le rapport se situe entre 30 000 et 40 000.
